# EUROPÄISCHE PATENTSCHRIFT

(11) **EP 3 378 008 B1**
(45) Veröffentlichungstag und Bekanntmachung des Hinweises auf die Patenterteilung: **28.07.2021**
(21) Anmeldenummer: 16788644.9
(22) Anmeldetag: 14.10.2016
(51) Int. Cl.: G06F 21/62, G06Q 10/08

(54) **KOMMUNIKATIONSPLATTFORM ZUM DIGITALEN DATENAUSTAUSCH, GENERISCHE ANWENDUNGSPROGRAMMIERSCHNITTSTELLE FÜR EINE DERARTIGE KOMMUNIKATIONSPLATTFORM, VERFAHREN ZUM BETREIBEN UND VERWENDUNG EINER DERARTIGEN KOMMUNIKATIONSPLATTFORM**
COMMUNICATION PLATFORM FOR EXCHANGING DIGITAL DATA, GENERIC APPLICATION PROGRAMMING INTERFACE FOR SUCH A COMMUNICATION PLATFORM, AND METHOD FOR OPERATING AND USING SUCH A COMMUNICATION PLATFORM
PLATE-FORME DE COMMUNICATION POUR L'ÉCHANGE NUMÉRIQUE DE DONNÉES, INTERFACE DE PROGRAMMATION D'APPLICATION GÉNÉRIQUE POUR UNE TELLE PLATE-FORME DE COMMUNICATION, PROCÉDÉ DE FONCTIONNEMENT ET UTILISATION D'UNE TELLE PLATE-FORME DE COMMUNICATION

(30) Priorität: 19.11.2015 DE 102015120093
(43) Veröffentlichungstag der Anmeldung: 26.09.2018
(73) Patentinhaber: catkin GmbH, 44263 Dortmund (DE)
(72) Erfinder: GORTER, Geert-Jan, 44267 Dortmund (DE); POST, Stephan, 42697 Solingen (DE)
(74) Vertreter: Wasiljeff, Johannes M.B.
(86) Internationale Anmeldenummer: PCT/EP2016/074719
(87) Internationale Veröffentlichungsnummer: WO 2017/084816

(56) Entgegenhaltungen:
- US-A1- 2002 049 622
- US-A1- 2014 222 522

## Beschreibung

Die Erfindung betrifft eine Kommunikationsplattform zum digitalen Datenaustausch mittels mindestens eines Auftrags innerhalb einer Wertschöpfungskette, eine generische Anwendungsprogrammierschnittstelle für eine derartige Kommunikationsplattform, ein Verfahren zum Betreiben einer derartigen Kommunikationsplattform sowie eine Verwendung einer derartigen Kommunikationsplattform.

Die Kommunikation entlang einer Wertschöpfungskette, wie z.B. zwischen Lieferant und Transporteur, zwischen Transporteur und Produzent und zwischen Produzent und Kunden, wird stetig komplexer und vielfältiger. Durch digitale Transformation dieser Wertschöpfungskette entsteht eine neue Form der Kollaboration bzw. Zusammenarbeit über Unternehmensgrenzen hinweg, die in kollaborativen Prozessen zusammengefasst werden kann.

Um unternehmensübergreifende kollaborative Prozesse, bei denen mehrere Teilnehmer zusammenarbeiten, zu vernetzen, stehen verschiedene Cloud-basierte Lösungen zur Verfügung, bei denen das Speichern von Daten sowie die Ausführung von Programmen in einem entfernten Rechenzentrum erfolgt. Bei derartigen Insel-Lösungen stellt ein Anbieter Ressourcen zur Verfügung und ein Nutzer nimmt diese Ressourcen in Anspruch, wobei die Steuerung der Ressourcen zentralisiert ist. Dadurch werden Anbieter und Nutzer, wie z.B. Dienstleister und Kunden, fest an das System angebunden. Bei wechselnden Anbietern bzw. Nutzern, wie z.B. Dienstleister, die für mehrere Kunden tätig sind oder Kunden, die mehrere Dienstleister einsetzen, sind diese gezwungen, ständig zwischen den Systemen zu wechseln.

Ferner sind herkömmlicher Weise die für einen digitalen Datenaustausch notwendigen Verbindungen zwischen einzelnen Teilnehmern der kollaborativen Prozesse nur statisch vorgesehen, das heißt, die Prozessstrukturen bzw. Auftragsstrukturen innerhalb einer Schnittstelle, die den Austausch von Befehlen und Daten zwischen verschiedenen Prozessen ermöglichen, sind hartkodiert, also fest im Programmcode eingebettet. Dadurch lässt sich jedoch nur eine begrenzte Anzahl vordefinierter Auftragsstrukturen abbilden, die nur mit erheblichem Entwicklungsaufwand geändert bzw. erweitert werden können.

Aus US 2002/0049622 A1 und US 2014/0222522 A1 bekannte Systeme verfolgen andere Konzepte und Ziele und sehen keine online ad-hoc API-Auftragsstruktur-Konfigurations-Änderungen und -Freigaben vor.

Der Erfindung liegt daher die Aufgabe zugrunde, den digitalen Datenaustausch innerhalb einer Wertschöpfungskette zu verbessern, um besonders einfach kollaborative Prozesse, wie sie vorstehend zum Stand der Technik erläutert sind, und somit Teilnehmer innerhalb der Wertschöpfungskette zu vernetzen, wobei ein kollaborativer Prozess die digitale Transformation des Informationsflusses zur Planung und Durchführung einer tatsächlichen physikalischen Leistung bezeichnet und ein kollaborativen Prozess somit einem Auftrag entspricht. Daher wird statt "kollaborativer Prozess" nachfolgend weitestgehend der Begriff "Auftrag" verwendet, um die Lesbarkeit zu vereinfachen, wobei der Begriff "Auftrag" nicht im kaufmännischen Sinn zu verstehen ist, sondern für einen kollaborativen Prozess im o.g. Sinn steht.

Die Erfindung löst diese Aufgabe mit einer Kommunikationsplattform mit den Merkmalen gemäß Anspruch 1, mit einer generischen Anwendungsprogrammierschnittstelle mit den Merkmalen gemäß Anspruch 11, mit einem Verfahren zum Betreiben einer derartigen Kommunikationsplattform mit den Merkmalen gemäß Anspruch 12 sowie mit einer Verwendung einer derartigen Kommunikationsplattform mit den Merkmalen gemäß Anspruch 14.

Bei der erfindungsgemäßen Kommunikationsplattform handelt es sich um eine unternehmensübergreifende und systemunabhängige Plattform, mit der eine Wertschöpfungskette, z.B. für die Transportabwicklung, abgebildet werden kann. Dabei beschreibt die Wertschöpfungskette die Prozesse, die ein Produkt oder eine Dienstleistung durchläuft, vom Ausgangsmaterial bzw. Ausgangsauftrag bis zur endlichen Verwendung bzw. endlichen Auftragsausführung. Die an der Wertschöpfungskette teilnehmenden Unternehmen werden über flexible Auftragsstrukturen vernetzt.

Die erfindungsgemäße Kommunikationsplattform dient dem digitalen Datenaustausch innerhalb einer Wertschöpfungskette mittels mindestens eines Auftrags, wobei jeder einzelne Auftrag einem kollaborativen Prozess entspricht, dessen digitale Daten in Modulen der Kommunikationsplattform über eine generische Anwendungsprogrammierschnittstelle online nutzbar sind. Hierbei bezeichnet ein kollaborativer Prozess die digitale Transformation des Informationsflusses zur Planung und Durchführung einer tatsächlichen physikalischen Leistung. Ferner ist jedem einzelnen Auftrag eine Auftragsstruktur zugehörig, deren digitale Daten ebenfalls in Modulen der Kommunikationsplattform nutzbar sind. Dazu weist die Kommunikationsplattform ein Auftragsstruktur-Modul auf, welches derart ausgestaltet ist, um eine, zwei oder mehr Auftragsstrukturen im laufenden Betrieb, das heißt zur Laufzeit, der Kommunikationsplattform mittels des Auftragsstruktur-Moduls zu konfigurieren, so dass die Auftragsstruktur online konfiguriert und freigegeben werden kann, so dass Ad-hoc-Prozesse schnell und ohne Ausfallzeiten der Kommunikationsplattform geändert und/oder hinzugefügt werden können. Die Konfiguration erfolgt anhand individueller Prozesse, wie sie innerhalb einer Wertschöpfungskette anfallen, insbesondere Auftragsprozesse zwischen einem Auftraggeber und einem Auftragnehmer.

Gemäß der Erfindung ist die Auftragsstruktur somit im laufenden Betrieb, das heißt zur Laufzeit, der Kommunikationsplattform mittels des Auftragsstruktur-Moduls konfigurierbar. Da die Auftragsstruktur online konfiguriert und freigegeben wird, lassen sich vorteilhafterweise Ad-hoc-Prozesse schnell und ohne Ausfallzeiten der Kommunikationsplattform automatisch im Hintergrund ändern und/oder hinzufügen.

Ferner ist das Auftragsstruktur-Modul derart ausgestaltet, um einer oder mehreren Benutzergruppen eine Berechtigung zum Erzeugen eines Auftrags und/oder eine Berechtigung zum Annehmen eines Auftrags für jede Auftragsstruktur zuzuweisen. Vorteilhafterweise sind die einzelnen Teilnehmer der kollaborativen Prozesse, wie z.B. einzelne Unternehmensabteilungen der teilnehmenden Unternehmen, indirekt durch die jeweiligen Berechtigungen verbunden, denn eine Auftragsstruktur ist mit einer Erzeugungsberechtigung für bestimmte Unternehmensabteilungen und einer Annahmeberechtigung für weitere Unternehmensabteilungen verbunden. So können potentielle Auftragnehmer potentielle Auftraggeber sowie noch nicht zugewiesene freigegebene Aufträge für bestimmte Auftragsarten abfragen und potentielle Auftraggeber potentielle Auftragnehmer sowie Kapazitätsmeldungen von Auftragsnehmern für bestimmte Auftragsarten abfragen.

Das Auftragsstruktur-Modul ist weiter derart ausgestaltet, um mindestens einem an der Wertschöpfungskette beteiligten Teilnehmer bzw. einer Benutzergruppe-ID eine Berechtigung zum Erzeugen eines Auftrags und mindestens einem weiteren Teilnehmer bzw. Benutzergruppe-ID eine Berechtigung zum Annehmen eines Auftrags zuzuweisen. Dabei ist ein Teilnehmer bevorzugt ein Untenehmen oder eine Unternehmensabteilung eines in der Wertschöpfungskette beteiligten Unternehmens mit einer zugewiesenen Benutzergruppe-ID.

Die erfindungsgemäße Kommunikationsplattform weist zum digitalen Datenaustausch weiter ein Auftraggeber-Modul auf, welches derart ausgestaltet ist, um mindestens einen Auftrag zu erzeugen. Dieser Auftrag wird durch Auswahl einer Auftragsstruktur erzeugt, zu welcher die Benutzergruppe-ID eine zur Erzeugung notwendigen Berechtigung aufweist und weist Arbeitsablaufinformationen auf, denen jeweils eine Statusinformation zu einem Zeitpunkt zuordenbar ist.

Somit werden vorteilhafterweise relevante Statusinformationen der einzelnen Aufträge für alle Teilnehmer, z.B. Teilnehmer einer Transport- oder Lieferkette, zugänglich gemacht. Der Zugriff der Teilnehmer auf alle Statusinformationen der Aufträge erfolgt dabei in Echtzeit, wobei unter Echtzeit eine Bearbeitung mit einem minimalen zeitlichen Versatz zur Realität verstanden wird. Da die Statusinformationen für alle berechtigten Teilnehmer sichtbar sind, ist vorteilhafterweise eine Nachverfolgung der Statusinformation auch über Unternehmensgrenzen hinweg möglich, wodurch Transparenz über den jeweiligen Status von Aufträgen erzeugt wird.

Ferner ist das Auftraggeber-Modul derart ausgestaltet, um den Auftrag oder die Aufträge mindestens einer Benutzergruppe-ID zuzuweisen, wobei die Benutzergruppe-ID zu einer zur Auftragannahme berechtigten Einheit, insbesondere Unternehmen oder Abteilung, zugehörig ist. Die Zuweisung erfolgt jedoch in Abhängigkeit der Berechtigung zur zugrundeliegenden Auftragsstruktur, so dass der Auftrag lediglich derjenigen Benutzergruppe-ID zugewiesen werden kann, welche die zugehörige Berechtigung zum Annehmen, insbesondere eine Annahmeberechtigung, eines Auftrags aufweist.

Wird der Auftrag keiner separaten Benutzergruppe-ID zugewiesen, kann der Auftrag explizit freigegeben werden und steht somit mehreren Auftragnehmern zur Annahme zur Verfügung. Es kann eine beliebige Verknüpfung zwischen einer Benutzergruppe-ID und dem Auftrag hergestellt werden, wenn die Benutzergruppe-ID über die entsprechende Berechtigung verfügt.

Schließlich ist das Auftraggeber-Modul derart ausgestaltet, um einen einer Benutzergruppe-ID zugewiesenen Auftrag oder einen von einer Benutzergruppe-ID angenommenen Auftrag, welcher zuvor zur Verfügung gestellt wurde, zur weiteren Bearbeitung freizugeben. Mit dieser Freigabe steht der Auftrag für andere Teilnehmer nicht mehr zur Verfügung. Dabei kann die Freigabe des Auftrags implizit durch die Zuweisung des Auftrags erfolgen.

Über ein optionales, mit dem Auftrag verknüpftes Nachrichtenfeld können zusätzlich Informationen, z.B. weitere Details zum Auftrag, zwischen der auftraggebenden Benutzergruppe-ID und der auftragnehmenden Benutzergruppe-ID ausgetauscht werden, wobei die Eingabe der Informationen über eine vom jeweiligen Benutzer getätigten Eingabe mittels geeigneter Eingabemittel erfolgt. Auf Auftragnehmerseite können solche Nachrichten optional benutzergruppenintern kommuniziert werden, z.B. zwischen einem Auftragsannahme-Disponent und einer dem Auftrag zugeordneten Ressource (Mensch oder Maschine).

Die erfindungsgemäße Kommunikationsplattform weist zum digitalen Datenaustausch weiter ein Auftragnehmer-Modul auf, welches derart ausgestaltet ist, um einen einer Benutzergruppe-ID zugewiesenen Auftrag zu bestätigen oder abzulehnen. Zusätzlich ist das Auftragnehmer-Modul derart ausgestaltet, um ein Interesse auf eine Zuweisung für einen von dem Auftraggeber-Modul zur Verfügung gestellten Auftrag zu melden. Im Falle eines bestätigten oder angenommenen Auftrags ist das Auftragnehmer-Modul weiter derart ausgestaltet, um die Statusinformation des Auftrags entsprechend anzupassen.

Die erfindungsgemäße Kommunikationsplattform weist schließlich die oben genannte generische Anwendungsprogrammierschnittstelle (Application Programming Interface (API)) auf, mit der die Module der Kommunikationsplattform, einschließlich des Auftragsstruktur-Moduls, des Auftraggeber-Moduls und des Auftragnehmer-Moduls, derart mit der Anwendungsprogrammierschnittstelle verbunden sind, dass digitale Daten der Auftragsstruktur in allen Modulen nutzbar sind sowie ein konkreter Auftrag von dem Auftraggeber-Modul und dem Auftragnehmer-Modul nutzbar ist. Ferner sind die Module derart verbunden, dass digitale Daten mittels mindestens eines Auftrags zwischen den Modulen übertragbar sind und Aufträge beliebiger Auftragsstrukturen untereinander verbindbar sind. Somit kann vorteilhafterweise aus Sicht eines Benutzers ein Auftrag im Auftragnehmer-Modul mit einem Auftrag im Auftraggeber-Modul verbunden werden. Es sind jedoch auch Verbindungen von Aufträgen innerhalb eines Moduls möglich.

Durch diese generische Anwendungsprogrammierschnittstelle lassen sich vorteilhafterweise verschieden aufgebaute Auftragsstrukturen, insbesondere Auftragsstrukturen unterschiedlicher Formate, und deren Aufträge untereinander verbinden, so dass alle berechtigten Teilnehmer auf diese Aufträge flexibel zugreifen können und ein nahtloses Zusammenarbeiten auch über Unternehmensgrenzen hinweg ermöglicht wird. Dabei sind die einzelnen Module der Kommunikationsplattform über die Anwendungsprogrammierschnittstelle miteinander derart verknüpft, dass digitale Daten, wie z.B. Statusinformationen der Aufträge, in Echtzeit, d.h. mit minimalem zeitlichen Versatz, zwischen den Modulen ausgetauscht werden können.

Mit der erfindungsgemäßen Kommunikationsplattform lässt sich vorteilhafterweise der digitale Datenaustausch innerhalb einer Wertschöpfungskette verbessern, um besonders einfach kollaborative Prozesse und somit Teilnehmer innerhalb der Wertschöpfungskette zu vernetzen. Beim Vernetzen lassen sich über verschiedene Auftragsstrukturen Geschäftsprozesse, die mit unterschiedlichen Systemen umgesetzt werden, auf effiziente Art und Weise austauschen und anderen Unternehmen, Abteilungen, Menschen und/oder Maschinen zur Verfügung stellen, ohne dass dazu gesonderte Absprachen zwischen den verschiedenen beteiligten Systemen notwendig sind.

Ferner wird die Verbindung von verschiedenen Auftragsstrukturen dahingehend verbessert, dass die Statusinformationen der einzelnen Aufträge in Abhängigkeit der entsprechenden Arbeitsablaufinformationen des Auftrags jederzeit jedem berechtigten Teilnehmer eines kollaborativen Prozesses zugänglich sind.

Gemäß einer Weiterbildung der Erfindung weist die Kommunikationsplattform ein Ressourcen-Modul auf, welches derart ausgestaltet ist, um mindestens einem Auftrag mobile Ressourcen - Mensch oder Maschine - zuzuweisen und digitale Daten des mindestens einen Auftrags der Kommunikationsplattform bereitzustellen. Bevorzugt ist das Ressourcen-Modul dem Auftragnehmer-Modul untergeordnet. Dabei ist das Ressourcen-Modul derart ausgestaltet, um einen von dem Auftragnehmer-Modul zugewiesenen Auftrag oder Teilauftrag zu bestätigen und entsprechende digitale Daten, wie z.B. Istdaten und GPS-Positionsdaten, durch die mobile Ressource zu übermitteln.

In einer Weiterbildung der Erfindung weist die Kommunikationsplattform ein Berechtigungs-Modul auf, welches derart ausgestaltet ist, um zwei verschiedene Berechtigungsstufen zum Zugriff auf die Kommunikationsplattform einzurichten, wobei eine Administrator-Berechtigung derart ausgestaltet ist, um den Zugriff auf administrative Aufgaben innerhalb der Kommunikationsplattform zu gewähren und eine Bearbeitungs-Berechtigung derart ausgestaltet ist, um den Zugriff auf operative Aufgaben innerhalb der Kommunikationsplattform zu gewähren. Durch die Trennung der administrativen Aufgaben von den operativen Aufgaben innerhalb der Kommunikationsplattform wird vorteilhafterweise die Effizienz komplexer Prozesse gesteigert, da überflüssige Tätigkeiten in der Administration und Doppeleingaben vermieden werden. Weiterhin erfolgt durch diese Trennung vorteilhafterweise eine Effizienzsteigerung der Kommunikationsplattform durch eine Spezialisierung in bestimmten Bereichen und ein hohes Maß an Sicherheit durch das Einrichten von Berechtigungen.

Eine Weiterbildung der Erfindung sieht vor, dass das Berechtigungs-Modul weiter derart ausgestaltet ist, um einen Zugriff anhand einer Administrator-ID, einer Benutzergruppe-ID, und/oder einer Ressourcen-ID auf die Kommunikationsplattform zu authentifizieren. Das Einloggen auf die Kommunikationsplattform erfolgt somit vorteilhafterweise für alle Teilnehmer zentral über die generische Anwendungsprogrammierschnittstelle derart, dass die Teilnehmer über zugehörige Berechtigungen über die Auftragsstrukturen verknüpft sind.

Die Erfindung ist jedoch nicht auf ein Online-Konfigurieren der Auftragsstrukturen über die generische Anwendungsprogrammierschnittstelle beschränkt, es können neue Auftragsstrukturen konfiguriert und aktiviert werden ohne Ausfallzeiten der Kommunikationsplattform, indem Änderungen und/oder Ergänzungen auf direktem Wege in einer zugehörigen Datenbank erfasst werden. Dies ist jedoch nicht die bevorzugte Methode.

In einer Weiterbildung der Erfindung weist ein Auftrag einen Zeitrahmen mit einer Startzeit und einer Endzeit auf, wobei dieser Zeitrahmen bei der Erzeugung des Auftrags mittels des Auftraggeber-Moduls oder später, jedoch vor der Annahme des Auftrags mittels des Auftragnehmer-Moduls festlegbar ist. Durch eine genaue Ist-Zeiterfassung der einzelnen Aufträge im Auftragnehmer-Modul lassen sich Statusinformationen in Abhängigkeit dieser Zeiterfassungen erzeugen. Zudem ergeben sich weitere Vorteile, z.B. in der Möglichkeit der Arbeitszeiterfassung von mobilen Mitarbeitern oder der Auswertung von Leistungsdaten.

Gemäß einer Weiterbildung der Erfindung weist die Auftragsstruktur ein oder mehrere Felder auf, wobei bei der Konfiguration der Auftragsstruktur den Feldern vorbestimmte Bearbeitungsmodi und/oder Pflichteingaben zugewiesen sind. Dabei weist die Auftragsstruktur einen oder mehrere Master- und Detailebenen mit einem, zwei oder mehr Feldern auf. Den einzelnen Feldern kann bei der Konfiguration ein Bearbeitungsmodus zugewiesen werden, welcher angibt, ob dieses Feld zur weiteren Bearbeitung vorgesehen ist. Ferner kann den einzelnen Feldern bei der Konfiguration ein oder mehrere Pflichteingaben zugewiesen werden, entsprechend der abzuarbeitenden Arbeitsablaufinformationen bzw. entsprechend der Abarbeitung der Prozessschritte bis zum Fertigstellungszeitpunkt des Auftrags. Über die Konfiguration der Auftragsstruktur ist beispielsweise festgelegt, ob ein entsprechendes Feld auf ein Mobilgerät übertragen werden soll. Somit können einzelne Felder zielgerichtet mit speziellen Anwendungsprogrammen (teilweise in der Technik auch nur als Anwendung bezeichnet) bearbeitet werden, wodurch vorteilhafterweise einzelne Auftragsstrukturen effizienter bearbeitet werden können.

Eine Weiterbildung der Erfindung sieht eine Kommunikationsplattform vor, bei der eine Istdaten-Erfassung als eine Pflichteingabe eines Feldes der Auftragsstruktur vorgesehen ist und anhand dieser Istdaten eine Statusinformation des Auftrags erzeugbar ist. Dadurch ist vorteilhafterweise eine Überwachung des gesamten Arbeitsablaufs eines einzelnen Prozesses für alle berechtigten Teilnehmer möglich.

In einer Weiterbildung der Erfindung ist ein Auftrag in mehrere Teilaufträge zerlegbar. Durch die Unterteilung eines Auftrags in mehrere Teilaufträge mit unterschiedlichen Strukturen kann z.B. ein Unternehmer mit einem oder mehreren Subunternehmern über entsprechende Teilaufträge vernetzt werden. Die Aufträge können vorteilhafterweise mittels der erfindungsgemäßen Kommunikationsplattform besonders einfach an einen oder mehrere Subdienstleister weitergeleitet werden, wobei stets eine Nachverfolgung des Auftragsstatus über die Statusinformation des Auftrags möglich ist.

Gemäß einer Weiterbildung der Erfindung sind einem Auftrag ein oder mehrere GPS-Tracker zuordenbar, wobei einem Auftrag beispielsweise ein GPS-Tracker des mobilen Mitarbeiters und ein GPS-Tracker der Maschine, z.B. eines Fahrzeugs, zugeordnet ist, welche jeweils einzeln verfolgbar sind. Die Zuordnung erfolgt für Aufgaben, die in ihrer Annahme bestätigt wurden und bevorzugt als Statusinformation "in Bearbeitung" aufweisen. Über einen bestimmten Prozessschritt entsprechend der Arbeitsablaufinformation werden mittels des GPS-Trackers Positionsdaten gesammelt. Anhand dieser Positionsdaten kann vorteilhafterweise ein Abgleich von Durchfahrtzeiten durchgeführt und/oder das Eintreten und/oder Verlassen eines geographischen Gebietes ermittelt werden. Weiterhin kann anhand der Positionsdaten vorteilhafterweise eine geschätzte Ankunftszeit errechnet werden.

In einer Weiterbildung der Erfindung sind mittels der Kommunikationsplattform Arbeitszeiten erfassbar, wobei diese Arbeitszeiten auftragsunabhängig oder einem Auftrag zugeordnet sind. Derartige Arbeitszeiten können vorteilhafterweise zur Aufstellung der erbrachten Leistungsdaten berücksichtigt werden, um die laufenden Personalkosten eines Prozesses zu überwachen.

Bei der erfindungsgemäßen Kommunikationsplattform können mindestens zwei, drei oder mehr der vorstehend beschriebenen Weiterbildungen miteinander kombiniert werden, um im Rahmen der Erfindung sinnvolle Merkmalskombinationen zu erhalten.

Mit der erfindungsgemäßen Kommunikationsplattform wird vorteilhafterweise eine interoperable Plattform bereitgestellt, die den digitalen Datenaustausch innerhalb einer Wertschöpfungskette trotz Verwendung verschiedener Anwendungsstandards unter den einzelnen Teilnehmern der Wertschöpfungskette ermöglicht, wobei Ad-hoc-Prozesse schnell und ohne Ausfallzeiten der Kommunikationsplattform abgeändert oder hinzugefügt werden können.

Ein weiterer Vorteil, den die Kommunikationsplattform bereitstellt, ist in der Möglichkeit zur Rechnungskontrolle zu sehen. Durch eine über die Anwendungsprogrammierschnittstelle verknüpfte kontinuierliche Rechnungsprüfung über die Erfassung der tatsächlichen Leistungsdaten, insbesondere Dienstleistungsdaten bezifferter Leistungsarten, können innerhalb eines Prozesses sowohl der Umsatz als auch die laufenden Kosten jederzeit erfasst werden. Im laufenden Auftrag durchgeführte Kostenänderungen sind dabei von der Gegenseite freizugeben. Die Kommunikationsplattform ermöglicht eine einheitliche, strukturierte Kommunikation zwischen den Teilnehmern und unterstützt somit die Einsatzplanung von mobilen Ressourcen auf Personal- und Maschinenebene.

Ferner wird die o.g., der Erfindung zugrunde liegende Aufgabe mittels einer generischen Anwendungsprogrammierschnittstelle (API) für eine vorstehend beschriebene Kommunikationsplattform gelöst, wobei mittels der Anwendungsprogrammierschnittstelle (API) die Module der Kommunikationsplattform, einschließlich des Auftragsstruktur-Moduls, des Auftraggeber-Moduls und des Auftragnehmer-Moduls, derart verbunden sind, dass digitale Daten der Auftragsstruktur in allen Modulen über die Anwendungsprogrammierschnittstelle online nutzbar sind, mindestens eine derartige Auftragsstruktur im laufenden Betrieb, das heißt zur Laufzeit, der Kommunikationsplattform mittels des Auftragsstruktur-Moduls konfigurierbar ist, so dass die Auftragsstruktur online konfigurierbar und freigebbar ist, so dass Ad-hoc-Prozesse schnell und ohne Ausfallzeiten der Kommunikationsplattform änderbar und/oder hinzufügbar sind, sowie ein konkreter Auftrag vom Auftraggeber-Modul und Auftragnehmer-Modul nutzbar ist. Ferner sind die Module derart verbunden, dass digitale Daten mittels mindestens eines Auftrags zwischen den Modulen übertragbar sind und Aufträge beliebiger Auftragsstrukturen untereinander verbindbar sind.

Durch die Verwendung der generischen Anwendungsprogrammierschnittstelle (API) können die Auftragsstrukturen konfiguriert statt programmiert werden. Das Fehlen "hartkodierter" Auftragsstrukturen bei der Konfiguration der Auftragsstrukturen bewirkt daher, dass vorteilhafterweise Aufträge verschiedener Branchen problemlos und effizient unterstützt und erforderlichenfalls miteinander verbunden werden können.

Weiter wird die o.g., der Erfindung zugrunde liegende Aufgabe mittels eines Verfahrens zum Betreiben einer vorstehend beschriebenen Kommunikationsplattform gelöst, wobei zunächst mindestens eine Auftragsstruktur mittels eines Auftragsstruktur-Moduls konfiguriert wird, wobei zum Konfigurieren neuer Auftragsstrukturen keine Datenmodelländerungen, Programmcodeänderungen und/oder Aktualisierungszeitfenster notwendig sind.

In einem nächsten Verarbeitungsschritt erfolgt eine Zuweisung mindestens einer Berechtigung für eine oder mehrere Benutzergruppen zu jeder Auftragsstruktur, insbesondere eine Berechtigung zum Erzeugen eines Auftrags und/oder eine Berechtigung zum Annehmen eines Auftrags.

Anschließend wird mindestens ein Auftrag mittels eines Auftraggeber-Moduls erzeugt, wobei dieser Auftrag durch Auswahl einer Auftragsstruktur, welche die zur Erzeugung notwendige Berechtigung aufweist, erzeugt wird und wobei der Auftrag Arbeitsablaufinformationen aufweist, denen jeweils eine Statusinformation zugeordnet werden kann.

Ferner werden der Auftrag oder die Aufträge mindestens einer Benutzergruppe-ID als Auftragnehmer mittels des Auftraggeber-Moduls zugewiesen, wobei diese Zuweisung unter Berücksichtigung einer der Auftragsstruktur zugewiesenen Berechtigung zum Annehmen des Auftrags erfolgt, oder der oder die Aufträge werden mittels des Auftraggeber-Moduls mindestens einer Benutzergruppe-ID zur Zuweisung zur Verfügung gestellt.

Der zugewiesene Auftrag wird in einem nächsten Verarbeitungsschritt mittels eines Auftragnehmer-Moduls bestätigt oder abgelehnt. Alternativ wird ein Interesse an einer Zuweisung eines Auftrags mittels eines Auftragnehmer-Moduls gemeldet. Für den Fall, dass der Auftrag bestätigt oder angenommen wurde, erfolgt eine Bearbeitung des Auftrags entsprechend mindestens einer dem Auftrag zugeordneten Arbeitsablaufinformation sowie eine Anpassung der zur Arbeitsablaufinformation zugehörigen Statusinformation unter Berücksichtigung gegebenenfalls vorhandener Detailinformationen, wie z.B. GPS-Positionsdaten, Start- und Endzeit, Pausendauer, erhobene Messdaten und ähnliches.

Ist der Auftrag zuvor bestätigt und entsprechend der Arbeitsablaufinformation abgeschlossen worden, wird mittels des Auftragnehmer-Moduls die Fertigstellung des Auftrags gemeldet.

Bei dem erfindungsgemäßen Verfahren erfolgt ein digitaler Datenaustausch innerhalb einer Wertschöpfungskette mittels einer generischen Anwendungsprogrammierschnittstelle (API) derart, dass die Statusinformationen der Aufträge von mindestens zwei der Module der Kommunikationsplattform einsehbar sind. Durch die Vernetzung der berechtigten Teilnehmer über flexibel erzeugte Aufträge werden vorteilhafterweise die Effizienz von Arbeitsablaufprozessen, insbesondere von kollaborativen Prozessen, erhöht und die Kosten innerhalb der Wertschöpfungskette gesenkt. Ferner können durch das Fehlen "hartkodierter" Auftragsstrukturen bei der Konfiguration der Auftragsstrukturen vorteilhafterweise Aufträge verschiedener Branchen problemlos und effizient unterstützt und erforderlichenfalls miteinander verbunden werden.

Ferner wird die o.g. Aufgabe mittels einer Verwendung einer vorstehend beschriebenen Kommunikationsplattform gelöst, wobei die Kommunikationsplattform vorzugsweise zum digitalen Datenaustausch verwendet wird, um besonders einfach kollaborative Prozesse und somit Teilnehmer innerhalb der Wertschöpfungskette zu vernetzen. Dies erfolgt über die generische Anwendungsprogrammierschnittstelle (API), über die Auftragsstrukturen konfiguriert und freigegeben werden können, und welche eine Nachverfolgung der Statusinformationen der einzelnen Aufträge in Echtzeit für alle berechtigten Teilnehmer ermöglicht.

Der Zugriff auf die Kommunikationsplattform erfolgt bevorzugt über zentrale Webdienste. Über einen intuitiv zu bedienenden Auftragsmonitor werden einem Benutzer Eingabemittel bereitgestellt, mit denen ein Zugriff auf ein, zwei oder mehr Module der Kommunikationsplattform ermöglicht wird.

Weitere Ausführungsformen ergeben sich aus den Ansprüchen sowie aus den anhand der Zeichnung näher erläuterten Ausführungsbeispielen. In der Zeichnung zeigen:
- Fig. 1: eine schematische Darstellung der einzelnen Module der Kommunikationsplattform und
- Fig. 2: ein Blockschaltbild zur Erläuterung des erfindungsgemäßen Verfahrens zum Betreiben einer Kommunikationsplattform.

Gleiche Bezugsziffern in den Figuren bezeichnen dabei gleiche Teile.

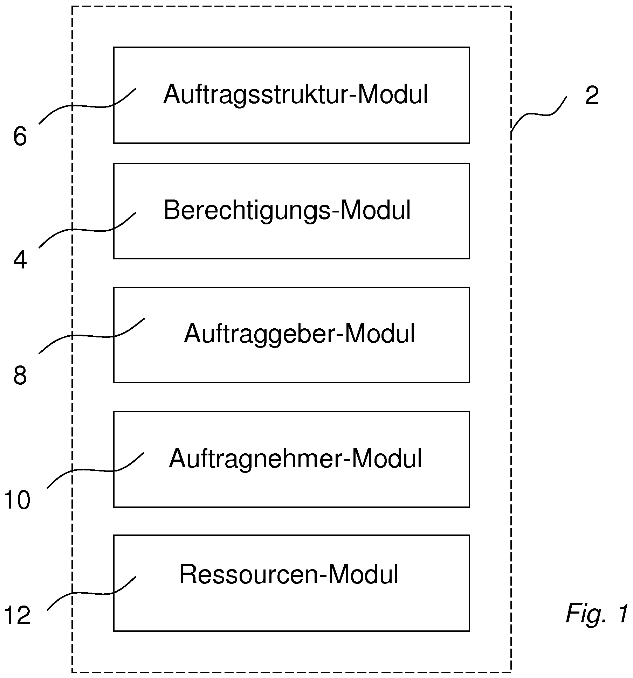

Fig. 1 zeigt eine schematische Darstellung der einzelnen Module der Kommunikationsplattform 2 zum Vernetzen von kollaborativen Prozessen, insbesondere kommunikativer Prozesse, wie z.B. Interaktion von Mitarbeitern, externen Partnern sowie Kunden im Arbeitsablauf eines Unternehmens. Der Zugriff auf die Kommunikationsplattform 2 erfolgt dabei über eine generische Anwendungsprogrammierschnittstelle (API), die die einzelnen Module miteinander verknüpft.

Das Berechtigungs-Modul 4 ermittelt bei einem Zugriff auf die Kommunikationsplattform 2 anhand der zu diesem Zugriff zugehörigen IDs die Berechtigung, insbesondere eine Berechtigung als Administrator oder die Zugehörigkeit zu einer Benutzergruppe oder Ressource, und kann somit den Zugriff auf die Kommunikationsplattform 2 authentifizieren. Der Zugriff auf die Kommunikationsplattform 2 erfolgt somit stets über das Berechtigungs-Modul 4.

Das Auftragsstruktur-Modul 6 konfiguriert eine Auftragsstruktur für den kollaborativen Prozess und weist einzelnen Benutzergruppen Berechtigungen zum Erzeugen oder/und zum Annehmen eines Auftrags dieser Auftragsstruktur zu. Die Konfiguration der Auftragsstruktur erfolgt durch Definieren und Festlegen einer oder mehrerer Tabellen mit Datenfeldern. In Abhängigkeit der Eigenschaften dieser Datenfelder kann über die Anwendungsprogrammierschnittstelle auf die definierten Auftragsstrukturen zugegriffen werden, ohne dass die Anwendungsprogrammierschnittstelle selbst geändert wurde.

Das Auftraggeber-Modul 8 übernimmt im Wesentlichen Auftraggeber-Funktionen und erzeugt mindestens einen Auftrag durch Auswahl einer entsprechenden Auftragsstruktur. Ein Auftrag kann jedoch nur dann erzeugt werden, wenn der Benutzergruppe die Berechtigung zum Erzeugen des Auftrags zugeordnet ist. Entsprechend der Auftragsstruktur sind dem Auftrag Arbeitsablaufinformationen zugeordnet, denen jeweils eine Statusinformation zugeordnet werden kann. Nach dem Erzeugen des Auftrags wird dieser Auftrag einer berechtigten Benutzergruppe-ID zur Annahme und weiteren Bearbeitung zugewiesen oder für alle berechtigten Teilnehmer der Kommunikationsplattform 2 zur Annahme freigegeben.

Das Auftragnehmer-Modul 10 übernimmt im Wesentlichen Auftragnehmer-Funktionen und bestätigt einen an die Benutzergruppe-ID zugewiesenen Auftrag, lehnt diesen zur Bearbeitung ab oder nimmt einen zur Verfügung gestellten Auftrag an. Wird der Auftrag bestätigt und bearbeitet, erfolgt nach Abarbeitung des Auftrags gemäß den Arbeitsablaufinformationen eine Meldung über die Fertigstellung des Auftrags an das Auftraggeber-Modul. Ferner wird gegebenenfalls die Statusinformation des Auftrags angepasst.

Das Ressourcen-Modul 12 ist bevorzugt ein Untermodul des Auftragnehmer-Moduls 10 und übernimmt im Wesentlichen Funktionen, die die mobilen Ressourcen eines Auftragnehmers betreffen, wobei zu den mobilen Ressourcen einzelne Maschinen und/oder mobile Mitarbeiter gehören. Über das Ressourcen-Modul 12 können vorteilhafterweise zugewiesene Aufträge akzeptiert und zu dem Auftrag eingeschränkt Statusinformationen angepasst werden sowie zugehörige Detailinformationen, wie z.B. Istdaten und GPS-Positionsdaten, erfasst werden.

Die erfindungsgemäße Kommunikationsplattform 2 dient insbesondere zur Steuerung von unternehmens- und systemübergreifenden Dienstleistungen, z.B. verkehrsträgerübergreifende Transporte, mit einem Informationsaustausch in Echtzeit. Dadurch lassen sich vorteilhafterweise Fehlerquoten in der Disposition senken, die Durchlaufzeiten der einzelnen Aufträge reduzieren und die Datenqualität innerhalb eines Prozesses verbessern.

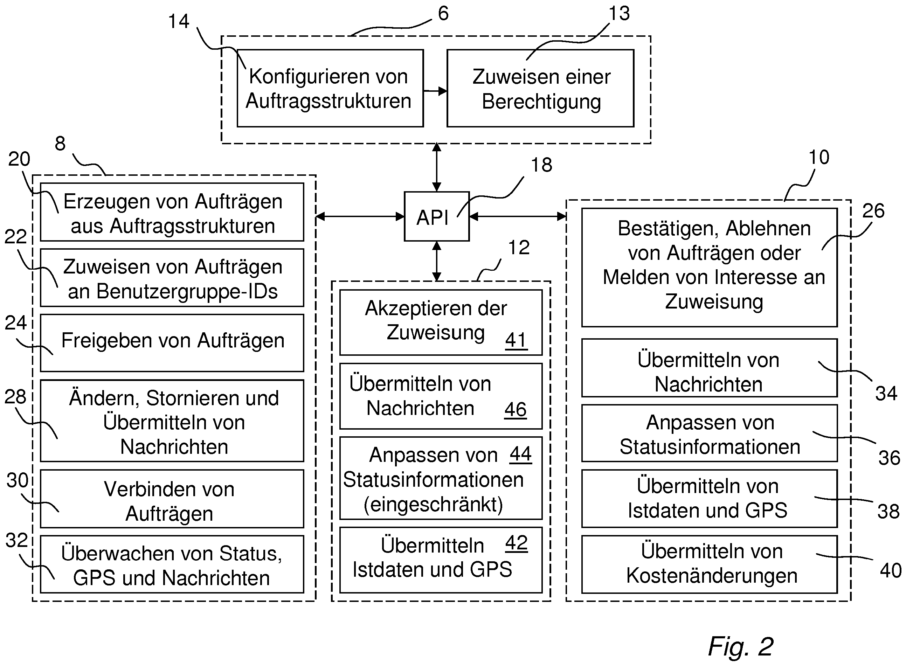

Fig. 2 zeigt ein Blockschaltbild zur Erläuterung des erfindungsgemäßen Verfahrens zum Betreiben der Kommunikationsplattform 2. Zum Betreiben der Kommunikationsplattform 2 ist es zunächst notwendig, eine oder mehrere Auftragsstrukturen mit unterschiedlichen Datenstrukturen mittels des Auftragsstruktur-Moduls 6 zu konfigurieren 14.

Anschließend werden Benutzergruppen bzw. Abteilungsgruppen zu den an dem kollaborativen Prozess teilnehmenden Firmen angelegt und diesen Benutzergruppen jeweils eine Berechtigung zum Erzeugen eines Auftrags und/oder eine Berechtigung zum Annehmen eines Auftrags einer vorher konfigurierten Auftragsstruktur zugewiesen 13. Die Konfigurierung der Auftragsstruktur 14 und die Zuweisung einer Berechtigung 13 erfolgt bevorzugt aufgrund von Eingaben eines Benutzers, insbesondere eines Administrators, über geeignete Eingabemittel einer Datenverarbeitungsanlage.

Über eine Anwendungsprogrammierschnittstelle (API) 18 kann von weiteren Modulen der Kommunikationsplattform 2 auf die angelegten Auftragsstrukturen zugegriffen werden.

In einem Anmeldeprozess können Mitarbeiter einer Unternehmensabteilung in der Kommunikationsplattform 2 eingeloggt bzw. angemeldet werden. Zum Erkennen der entsprechenden Authentifizierung überprüft ein hier nicht dargestelltes Berechtigungs-Modul 4 die angegebenen Administrator-, Ressourcen- und Benutzergruppe-IDs sowie die den IDs zugewiesenen Berechtigungen zum Zugriff auf die Auftragsstrukturen anhand von in der Kommunikationsplattform 2 hinterlegten Werten. Wobei zuvor ein Systembenutzer einer Benutzergruppe-ID innerhalb der Wertschöpfungskette zugewiesen wurde, welcher aufgrund seiner Zugehörigkeit zu dieser Unternehmensabteilung die Berechtigung zum Erzeugen eines Auftrags aufweist und ein Systembenutzer zuvor einer Benutzergruppe-ID innerhalb der Wertschöpfungskette zugewiesen wurde, welcher aufgrund seiner Zugehörigkeit zu dieser Unternehmensabteilung die Berechtigung zum Annehmen eines Auftrags aufweist. Dabei ist es durchaus möglich, dass einer Benutzergruppe-ID beide Berechtigungen zugewiesen sind. Auch ist es möglich dass ein Systembenutzer mehreren Unternehmensabteilungen angehört.

Aufgrund von Eingaben eines Systembenutzers mit einer Benutzergruppe-ID mit der entsprechenden Berechtigung zum Erzeugen eines Auftrags erzeugt dann ein Auftraggeber-Modul 8 durch Auswahl einer Auftragsstruktur einen Auftrag 20. Diesem Auftrag sind aufgrund der zugehörigen Auftragsstruktur ein oder mehrere Arbeitsablaufinformationen zugeordnet, denen jeweils eine Statusinformation zugeordnet werden kann. Bevorzugt wird mittels des Auftraggeber-Moduls 8 zu diesem Auftrag auch ein Zeitrahmen mit einer Startzeit und einer Endzeit für die Durchführung des Auftrags festgelegt. Die Eingabe weiterer, dem Auftrag zugehöriger Informationen sowie des vorgesehenen Zeitrahmens erfolgt bevorzugt aufgrund von Eingaben eines Systembenutzers durch geeignete Eingabemittel einer Datenverarbeitungsanlage. Anschließend wird dieser Auftrag einer Benutzergruppe-ID zur Bearbeitung zugewiesen 22 und zur Bearbeitung freigegeben 24 oder durch vorherige Freigabe allen berechtigten Teilnehmern zur Verfügung gestellt. Dabei kann eine Freigabe implizit durch die Zuweisung einer Benutzergruppe-ID erfolgen.

Ein Systembenutzer der erfindungsgemäßen Kommunikationsplattform 2 ist stets einer Benutzergruppe-ID zugeordnet, wenn er das Erzeugen eines Auftrags 20 veranlasst. In der realen Wertschöpfungskette kann dieser Systembenutzer ein Auftraggeber oder ein Auftragnehmer oder beides sein, wenn er als Auftragnehmer weitere Unteraufträge oder Teilaufträge erzeugt.

Stellt ein Auftragnehmer einer Wertschöpfungskette eine Kapazitätsanfrage, indem er eine Auftragsanfrage zu einer vorhandenen Datenstruktur anderen berechtigten Teilnehmern bzw. den potentiellen Auftraggebern zur Verfügung stellt, wird die Erzeugung dieses Auftrags 20 ebenfalls über eine Benutzergruppe-ID mittels des Auftraggeber-Moduls 8 veranlasst.

Gleiches gilt für einen Systembenutzer der erfindungsgemäßen Kommunikationsplattform 2, der das Bestätigen, Ablehnen oder Annehmen 26 eines Auftrags veranlasst. Dieser Systembenutzer besitzt dann eine Benutzergruppe-ID und kann einen ihm zugewiesenen Auftrag bestätigen oder ablehnen 26. Erfolgt eine Kapazitätsanfrage eines Auftragnehmers einer Wertschöpfungskette, indem er einen Auftrag anderen berechtigten Teilnehmern zur Verfügung stellt, kann ein Auftraggeber einer Wertschöpfungskette diesen Auftrag über das Auftragnehmer-Modul 10 annehmen 26, wenn er eine entsprechende Benutzergruppe-ID besitzt.

Mittels des Auftraggeber-Moduls 8 ist zudem ein Ändern oder Stornieren des Auftrags und/oder eine Übermittlung einer zum Auftrag zugehörigen Nachricht möglich 28 sowie ein Verbinden von Aufträgen 30 zum Vernetzen von umfangreichen kollaborativen Prozessen.

Schließlich erfolgt mittels des Auftraggeber-Moduls 8 eine Überwachung von Statusinformationen, GPS-Positionsdaten und/oder Nachrichten 32 zu den jeweiligen Aufträgen. Die Überwachung des Auftrags erfolgt bevorzugt mittels eines Auftragsmonitors.

Nach erfolgter Authentifizierung durch die Kommunikationsplattform 2 unter Berücksichtigung der Benutzergruppe-ID und der entsprechenden Berechtigung zur Annahme eines Auftrags mittels eines Auftragnehmer-Moduls 10 kann über die API 18 auf die zugewiesenen und freigegebenen Aufträge zugegriffen werden, so dass ein zugewiesener Auftrag abgelehnt oder bestätigt werden 26 kann, wobei die Ablehnung oder Bestätigung 26 über die API 18 dem Auftraggeber-Modul 8 übergeben wird.

Im Falle einer Ablehnung 26 des Auftrags wird dieser vom Benutzer mit Auftraggeberberechtigung in der Regel einer weiteren Benutzergruppe-ID zugewiesen 22.

Mittels des Auftragnehmer-Moduls 10, des Auftraggeber-Moduls 8 und des Ressourcen-Moduls 12 lassen sich über die API 18 zwischen den Modulen oder innerhalb des Auftragnehmer-Moduls 10 Nachrichten übertragen 34, die bevorzugt einzelnen Aufträgen zugeordnet sind.

Mittels des Auftragnehmer-Moduls 10 kann durch alle berechtigten Teilnehmer auf die zur Verfügung gestellten, vom Auftraggeber freigegebenen aber nicht zugeordneten Aufträge mittels einer Nachricht als Interessebekundung reagiert werden und somit über eine Benutzergruppe-ID ein Interesse an Zuweisung des Auftrags gemeldet werden 26.

Ein Auftrag kann alternativ im Auftragnehmer-Modul 10 initiiert werden. Der vom Auftragnehmer mit einer Berechtigung zur Annahme eines Auftrags auf einer Auftragsstruktur erzeugte Datensatz gilt als Kapazitätsmeldung für einen Auftrag dieser Art und kann durch Freigabe allen berechtigten Auftraggebern zur Verfügung gestellt werden. Im Auftraggeber-Modul 8 wird die Kapazitätsmeldung in einen Auftrag umgewandelt.

Zudem ist mittels des Auftragnehmer-Moduls 10 die Bearbeitung und die Übermittlung von digitalen Daten über die API 18 an weitere Module der Kommunikationsplattform 2 möglich, wie z.B. das Anpassen von Statusinformationen 36, das Übermitteln von Istdaten und/oder GPS-Positionsdaten 38 sowie das Übermitteln von Kostenänderungen 40. Dadurch werden kollaborative Prozesse und somit auch die an dem Prozess beteiligten Teilnehmer über die Kommunikationsplattform 2 vernetzt.

Bei Bestätigung des Auftrags 26 kann dieser Auftrag in ein oder mehrere Teilaufträge zerlegt werden, wenn mehrere Mitarbeiter bzw. Dienstleister an dem Prozess beteiligt sind, wobei diese Teilaufträge lediglich mit dem Ursprungsauftrag vernetzte neue Aufträge sind.

Aufträge können mittels des Auftragnehmer-Moduls 10 über die API 18 an das Ressourcen-Modul 12 weitergeleitet werden. Die einzelnen Auftragsdaten werden bevorzugt an ein Mobilgerät, insbesondere an eine dynamische Smartphone-App für mobile Mitarbeiter, übersandt, wobei lediglich die zu diesem Teilauftrag relevanten Daten übermittelt werden, um die Effizienz bei der Auftragsabwicklung zu erhöhen.

Über das Mobilgerät wird ein Startzeitpunkt der Bearbeitung an das Ressourcen-Modul 12 übertragen und zu dem Auftrag zugehörige Pflichteingaben, wie z.B. Arbeitsschritte, abgearbeitet und zugehörige Istdaten und/oder GPS-Positionsdaten an das Auftragnehmer-Modul 10 übermittelt 42. Ferner lassen sich über die API 18 an weitere Module der Kommunikationsplattform oder innerhalb des Ressourcen-Moduls 12 Nachrichten übertragen 46, die bevorzugt einzelnen Aufträgen zugeordnet sind. Anhand dieser Daten des Mobilgerätes erfolgt mittels des Ressourcen-Moduls 12 eine Anpassung der Statusinformation 44 des Auftrags, wobei das Anpassen der Statusinformation 44 bevorzugt eingeschränkt in Abhängigkeit der für diesen Auftrag bzw. Teilauftrag relevanten Daten erfolgt. Die aktuelle Statusinformation kann über die API 18 auch von dem Auftraggeber-Modul 8 eingesehen werden, wodurch der gesamte Prozess für alle berechtigten Teilnehmer transparent wird.

Zusätzlich kann in der Kommunikationsplattform 2 eine Applikation für die Arbeitszeiterfassung und eine kontinuierliche Rechnungsprüfung vorgesehen werden, da die einzelnen Auftragsdaten über die API 18 von mehreren Modulen abrufbar sind.

Die Kommunikationsplattform 2 und somit das Verfahren zum Betreiben dieser Kommunikationsplattform 2 lassen sich problemlos an vorhandene Systeme anbinden, wie z.B. Speditionssoftware oder ERP-Systeme (Enterprise-Resource-Planning-Systeme). Über die erfindungsgemäße Kommunikationsplattform 2 lässt sich das gesamte, an der Wertschöpfungskette bzw. Lieferkette beteiligte Partnernetzwerk untereinander verbinden, wodurch vorteilhafterweise eine Überwachung des gesamten kollaborativen Prozesses in Echtzeit ermöglicht wird, indem klar strukturierte und transparente Auftragsabwicklungen jeweils von der Auftragserteilung bis zur Rückmeldung des fertigen Auftrags durchgeführt werden.

Im Folgenden wird beispielhaft das Konfigurieren einer Auftragsstruktur 14 anhand eines Beispielcodes näher erläutert, wobei ein oder mehrere "Register" (Tabellen) mit Datenfeldern definiert werden und Eigenschaften der Register und Felder festgelegt werden:

```
 ServiceType CreateServiceTypeAsPlatformAdmin(string name);
 (ServiceType = ID + Name)
```

Die Prozessstruktur ("Service-Type") benötigt Felder, gruppiert in Tabellen ("Register"):

```
 long AddOrModifyRegister(Register register);
 class Register {
 String RegisterName { get; set; }
 String Classname { get; set; }
 String DependingClassname { get; set; }
 long ServiceTypeId { get; set; }
 RegisterField[] Fields { get; set; }
 IDValue[] SubRegisters { get; set; }}
```

```
 class RegisterField {
 long RegisterId { get; set; }
 String FieldName { get; set; }
 String Key { get; set; }
 TypeFormat Format { get; set; }
 // ...UNION of typed data ...}
```

Über die API 18 kann auf die definierten Prozessstrukturen zugegriffen werden, ohne dass die API 18 selbst geändert wurde.

Wird in einem Feld ein Pflichteintrag beim späteren Anlegen einer Aufgabe erweitert, kann die Klasse erweitert werden:

```
 bool IsPlannedValueMandatory { get; set; }
```

Für den Fall, dass Feldwerte übermittelt werden, kann die Klasse ebenfalls erweitert werden:

```
 bool IsActualValueMandatory { get; set; }
```

Dabei kann ein "Register" ein oder mehrere "Unterregister" enthalten:

```
 RegisterMAIN has classname: "class1"
 RegisterSUB has classname: "class2" and DependingClassname: "class1"
```

Anhand eines Beispielcodes wird im Folgenden näher erläutert, wie über eine erste Berechtigungsstufe Unternehmens- und/oder Abteilungsgruppen erstellt werden und diesen Erzeugungs- und/oder Annahmeberechtigungen zugewiesen werden:

```
 long AddCompany(string name);
 //Add a new company to the system
 IDValue AddGroup(string name, long companyId);
 //Define a new group (i.e. department within the company)
 bool SetAcceptAuthorizationGroupServiceTypes(long groupId, long[] ServiceTypes)
 //Authorize groups to accept one or more service types (as a contractor)
 bool SetCreateAuthorizationGroupServiceTypes(long groupId, long[] ServiceTypes)
 //Authorize groups to create services of one or more service types (as a princi-
 pal)
```

Diese Unternehmensgruppen sind nun in der Lage, Aufträge verschiedener Auftragsstrukturen zu erzeugen und anzunehmen. Im Folgenden wird ein Systembenutzer, welcher eine Aufgabe erzeugt, als "owner" bezeichnet und ein Systembenutzer, welcher diesen Auftrag annimmt, als "contractor".

Im Folgenden wird beispielhaft das Erzeugen eines Auftrags 20 anhand eines Beispielcodes näher erläutert:

```
 IDValue[] GetCreationServiceTypes()
 //Receive a List of the current group's rights for servicetypes to create
 Service CreateService(Service toCreate)
 //Additional Information stored in toCreate: TypeId, ...
 Register GetRegister(long registerId)
 //Receive a defined register by Id, from the created service
 void UpdatePlannedFields(params RegisterField[] fields)
 //Update the register field entries by defining planned values for task instruc-
 tions
 IDValue[] GetAssignableGroups(long serviceTypeId)
 //Receive a list of available departments, these departments are "valid" to be
 //assigned to the given servicetype Id
 bool AssignService(long serviceId, long contractorId)
 //Assign a department of a company to the service //- this department will be or-
 dered to run and finish the service
```

Die erfindungsgemäße API 18 kann für die Kommunikation in einem ERP- oder PPS-System verwendet werden, um die in der Kommunikationsplattform 2 vorhandenen Auftragsstrukturen zu verwenden.

Im Folgenden wird beispielhaft das Annehmen von Aufträgen 26 anhand eines Beispielcodes näher erläutert, wobei ein Auftragnehmer in periodischen Abständen innerhalb der Kommunikationspattform 2 nach neu erzeugten Aufträgen suchen kann:

```
 ServiceOverview[] GetUnknownServiceOverviewRangeAllTime(bool withMandatoryEn-
 tries, bool markasknown);
 //Application integration method, used to synchronize mandatory fields or service
 //status values, in that case the parameters would be (FALSE, TRUE)
 bool ConfirmService(long serviceId)
 //Confirm the service (that you are willing to process the task)
```

Systembenutzer können Personen oder Maschinen sein, die den einzelnen Aufträgen zugeordnet werden können. Diese Systembenutzer haben in der Regel jedoch keinen Lese- und Schreibzugriff auf die Aufgaben, welche sie abarbeiten sollen.

```
 IDValue[] GetAssignableRessources(long serviceId)
 Get a list of valid resource users for the given service
 bool AssignServiceResource(long serviceId, long? ressourceId)
 Assign a resource user to the given service Id
```

```
 class ServiceOverview {
 long ServiceId { get; set; }
 IDValue ServiceType { get; set; }
 TypeStatus Status { get; set; }
 long? AssignedGroup { get; set; }
 long? AssignedUser { get; set; }
 RegisterField[] MandatoryFields { get; set; }}
```

Das Erzeugen von Teilaufträgen ist identisch mit der Erzeugung eines Auftrags 20, nur zusätzlich mit einem übergeordneten Auftrag verbunden. D.h., ein dem Auftragnehmer untergeordneter Systembenutzer erhält über das Ressourcen-Modul 12 eine Aufgabe und akzeptiert diese Zuweisung 41.

Im Folgenden wird beispielhaft das Anpassen von Statusänderungen 36 anhand eines Beispielcodes näher erläutert, wobei ein Auftragnehmer zunächst einen Überblick über alle Aufträge, an denen er beteiligt ist, aufruft:

```
 ServiceList GetServicesContextBasedPaged(TypeFilter filter, int skip, int take)
 //Receive a list of tasks depending on a defined filter
 ServiceList GetServicesBySearchKeyword(string searchString, TypeSearchField
 field, bool containsOrStartsWith, int skip, int take)
 //Receive a list of tasks depending on a defined search-keyword
 ServiceList GetServiceRepresentationsDateRange(DateTime from, DateTime till)
 //Receive a list of tasks of a given period of time
```

Jedem einzelnen Auftrag ist eine Auftragstruktur zugehörig, über die aktuelle Feldwerte, insbesondere Messdaten, verarbeitet und übermittelt werden:

```
 Service GetService(long serviceId)
 //Load further informations about the service
 void ServiceResourceApprove(long serviceId)
 //Approve the service (so that your department knows that you have read and ap-
 proved //to process the task)
 void StartServiceProcess(long serviceId, DateTime startingTime)
 //Start executing the task, Status = InProcess
 Register GetRegister(long registerId)
 //Receive a defined register by Id, from the created task
 void UpdateActualFields(params RegisterField[] fields)
 //Write new actual field entries onto the service
 void FinishService(long serviceId, DateTime endingTime)
 //Finish executing the service
```

```
 class Service {
 IDValue Parent { get; set; }
 IDValue[] Childs { get; set; }
 string Name { get; set; }
 TypeStatus State { get; set; }
 String TypeName { get; set; }
 IDValue[] Registers { get; set; }
 IDValue Owner { get; set; }
 IDValue Contractor { get; set; }
 IDValue AssignedUser { get; set; }
 TypeStatusTransition[] PossibleStatusChanges { get; set; } }
```

Dabei zeigt "PossibleStatusChanges" eine Vielzahl von Aktionen, die in Abhängigkeit von der aktuellen Statusinformation möglich sind, wobei typische Statusinformationen sind:

```
 enum TypeStatus {
 Initial,
 Refused,
 Assigned,
 Changed,
 Confirmed,
 InProcess,
 Finished,
 Cancelled,
 Invoiced }
```

Der Systembenutzer, der berechtigt ist eine Aufgabe zu erstellen, wird in regelmäßigen Abständen innerhalb der Kommunikationsplattform 2 nach neuen Aufträgen suchen, mit dem Status "incoming":
ServiceOverview[] GetUnknownServiceOverviewRangeAllTime(bool withMandatoryFields, bool markasknown);
Application integration method, used to synchronize mandatory fields or service status values, in that case the parameters would be (TRUE, TRUE)

Vorteilhafterweise sind keine weiteren Aktionen über die API 18 notwendig, denn der "serviceOverview" bietet bereits die aktuelle Statusinformation sowie Pflichtfeldeinträge werden während der Abarbeitung vorgenommen. Auch die Systembenutzer innerhalb der Unternehmensgruppen, welche z.B. Planer der Verarbeitungsabteilung sind, haben Zugriff auf die Statusinformationen und Istdaten der einzelnen Aufträge.

Vorteilhafterweise ist die erfindungsgemäße Kommunikationsplattform 2 in der Lage, mehrere Aufgaben miteinander zu verbinden. Diese Verbindungen bzw. Links können eingestellt werden:
- automatische Verbindungen: auf der Grundlage gemeinsamer "Informationen" von allen Dienstleistern, beispielsweise eine gemeinsame übergeordnete Aufgabe oder einen gemeinsamen Feldeintrag wie "Container" oder "Truck". Auf diese Weise können Aufgaben auch über Unternehmensgrenzen hinweg einfach verbunden werden. Selbstverständlich kann die Verknüpfung wahlweise an den Unternehmensgrenzen beschränkt werden.
- manuelle Verbindung: durch den Erzeuger einer Aufgabe, wenn dieser über zusätzliches externes Wissen über den kollaborativen Prozess verfügt.

```
 void UpdateServiceLinks(long serviceId, params long[] connectedServiceIds)
 Requesting a set of linked Services is done by calling:
 LinkInformation[] GetServiceLinks(long serviceId)
 class LinkInformation {
 IDValue Service { get; set; } }
```

Sämtliche in der vorstehenden Beschreibung sowie in den Ansprüchen genannten Merkmale sind sowohl einzeln als auch in beliebiger Kombination mit den Merkmalen der unabhängigen Ansprüche kombinierbar. Die Offenbarung der Erfindung ist daher nicht auf die beschriebenen bzw. beanspruchten Merkmalskombinationen beschränkt. Vielmehr sind alle im Rahmen der Erfindung sinnvollen Merkmalskombinationen als offenbart zu betrachten.

## Patentansprüche

1. Kommunikationsplattform zum digitalen Datenaustausch innerhalb einer Wertschöpfungskette, bspw. einer Lieferkette, mittels mindestens eines Auftrags, wobei die Wertschöpfungskette die Prozesse, die ein Produkt oder eine Dienstleistung durchläuft, vom Ausgangsmaterial bzw. Ausgangsauftrag bis zur endlichen Verwendung bzw. endlichen Auftragsausführung beschreibt, wobei jedem einzelnen Auftrag eine Auftragsstruktur zugehörig ist, deren digitale Daten in Modulen der Kommunikationsplattform (2) über eine generische Anwendungsprogrammierschnittstelle (18) online nutzbar sind, und wobei die Kommunikationsplattform (2) mindestens folgende Module aufweist:
i) ein Auftragsstruktur-Modul (6), welches derart ausgestaltet ist,
a) um mindestens eine derartige Auftragsstruktur im laufenden Betrieb, das heißt zur Laufzeit, der Kommunikationsplattform (2) mittels des Auftragsstruktur-Moduls (6) zu konfigurieren (14), so dass die Auftragsstruktur online konfiguriert und freigegeben werden kann, so dass Ad-hoc-Prozesse schnell und ohne Ausfallzeiten der Kommunikationsplattform geändert und/oder hinzugefügt werden können,
b) um einer oder mehreren Benutzergruppen eine Berechtigung zum Erzeugen eines derartigen Auftrags und/oder eine Berechtigung zum Annehmen eines derartigen Auftrags für jede Auftragsstruktur zuzuweisen (13),
c) um mindestens einer an der Wertschöpfungskette beteiligten Benutzergruppe-ID eine Berechtigung zum Erzeugen eines derartigen Auftrags und mindestens einer weiteren Benutzergruppe-ID eine Berechtigung zum Annehmen eines Auftrags zuzuweisen (13),
ii) ein Auftraggeber-Modul (8), welches derart ausgestaltet ist,
a) um mindestens einen derartigen Auftrag zu erzeugen (20), wobei dieser Auftrag durch Auswahl einer derartigen Auftragsstruktur erzeugt wird, zu welcher die Benutzergruppe-ID eine zur Erzeugung notwendige Berechtigung aufweist, und wobei dem Auftrag Arbeitsablaufinformationen zugeordnet sind, denen jeweils eine Statusinformation zuordenbar ist,
b) um den oder die Aufträge einer Benutzergruppe-ID zuzuweisen (22) und freizugeben (24) oder um den oder die Aufträge durch Freigabe einer oder mehreren Benutzergruppe-IDs mit dem Zweck einer Zuweisung zur Verfügung zu stellen,
iii) ein Auftragnehmer-Modul (10), welches derart ausgestaltet ist,
a) um einen einer Benutzergruppe-ID zugewiesenen Auftrag zu bestätigen oder abzulehnen oder Interesse auf eine Zuweisung für einen zur Verfügung gestellten Auftrag zu melden (26),
b) um die Statusinformation des Auftrags anzupassen (36),
iv) und wobei die Module der Kommunikationsplattform (2), einschließlich des Auftragsstruktur-Moduls (6), des Auftraggeber-Moduls (8) und des Auftragnehmer-Moduls (10), derart mit der Anwendungsprogrammierschnittstelle (18) verbunden sind, dass
- digitale Daten der Auftragsstruktur in allen Modulen nutzbar sind
- sowie ein konkreter Auftrag von dem Auftraggeber-Modul (8) und dem Auftragnehmer-Modul (10) nutzbar ist
- und Aufträge beliebiger Auftragsstrukturen untereinander verbindbar sind.

2. Kommunikationsplattform nach Anspruch 1 mit einem Ressourcen-Modul (12), welches derart ausgestaltet ist, um mindestens einen Auftrag mobilen Ressourcen zuzuweisen und einer solchen Ressource die digitalen Daten des zugewiesenen Auftrags der Kommunikationsplattform (2) bereitzustellen.

3. Kommunikationsplattform nach Anspruch 1 oder 2 mit einem Berechtigungs-Modul (4), welches derart ausgestaltet ist, um zwei Berechtigungsstufen zum Zugriff auf die Kommunikationsplattform (2) einzurichten, wobei eine Administrator-Berechtigung derart ausgestaltet ist, um den Zugriff auf administrative Aufgaben innerhalb der Kommunikationsplattform (2) zu gewähren und eine Bearbeitungs-Berechtigung derart ausgestaltet ist, um den Zugriff auf operative Aufgaben innerhalb der Kommunikationsplattform (2) zu gewähren.

4. Kommunikationsplattform nach Anspruch 3, bei der das Berechtigungs-Modul (4) weiter derart ausgestaltet ist, um einen Zugriff anhand einer Administrator-ID, einer Ressourcen-ID und/oder einer Benutzergruppe-ID auf die Kommunikationsplattform (2) zu authentifizieren.

5. Kommunikationsplattform nach einem der vorhergehenden Ansprüche, bei der der Auftrag einen Zeitrahmen mit einer Startzeit und einer Endzeit aufweist, wobei dieser Zeitrahmen bei der Erzeugung des Auftrags (20) mittels des Auftraggeber-Moduls (6) oder bei der Annahme des Auftrags (26) mittels des Auftragnehmer-Moduls (10) festlegbar ist.

6. Kommunikationsplattform nach einem der vorhergehenden Ansprüche, bei der die Auftragsstruktur ein oder mehrere Felder aufweist, wobei bei der Konfiguration der Auftragsstruktur (14) den Feldern vorbestimmte Bearbeitungsmodi und/oder Pflichteingaben zugewiesen sind.

7. Kommunikationsplattform nach Anspruch 6, bei der eine Istdaten-Erfassung als eine Pflichteingabe eines Feldes der Auftragsstruktur vorgesehen ist und anhand dieser Istdaten eine Statusinformation des Auftrags erzeugbar ist.

8. Kommunikationsplattform nach einem der vorhergehenden Ansprüche, wobei ein Auftrag in mehrere Teilaufträge zerlegbar ist.

9. Kommunikationsplattform nach einem der vorhergehenden Ansprüche, bei der einem Auftrag ein oder mehrere GPS-Tracker zuordenbar sind.

10. Kommunikationsplattform nach einem der vorhergehenden Ansprüche, bei der Arbeitszeiten erfassbar sind, wobei diese Arbeitszeiten auftragsunabhängig oder einem Auftrag zugeordnet sind.

11. Generische Anwendungsprogrammierschnittstelle für eine Kommunikationsplattform (2) nach einem der Ansprüche 1 bis 10, wobei mittels der Anwendungsprogrammierschnittstelle (18) die Module der Kommunikationsplattform (2), einschließlich des Auftragsstruktur-Moduls (6), des Auftraggeber-Moduls (8) und des Auftragnehmer-Moduls (10), derart verbunden sind, dass
- digitale Daten der Auftragsstruktur in allen Modulen über die Anwendungsprogrammierschnittstelle (18) online nutzbar sind,
- mindestens eine derartige Auftragsstruktur im laufenden Betrieb, das heißt zur Laufzeit, der Kommunikationsplattform (2) mittels des Auftragsstruktur-Moduls (6) konfigurierbar (14) ist, so dass die Auftragsstruktur online konfigurierbar und freigebbar ist, so dass Ad-hoc-Prozesse schnell und ohne Ausfallzeiten der Kommunikationsplattform änderbar und/oder hinzufügbar sind,
- sowie ein konkreter Auftrag vom Auftraggeber-Modul (8) und Auftragnehmer-Modul (10) nutzbar ist
- und Aufträge beliebiger Auftragsstrukturen untereinander verbindbar sind.

12. Verfahren zum Betreiben einer Kommunikationsplattform (2) zum digitalen Datenaustausch innerhalb einer Wertschöpfungskette, bspw. einer Lieferkette, mittels mindestens eines Auftrags, wobei die Wertschöpfungskette die Prozesse, die ein Produkt oder eine Dienstleistung durchläuft, vom Ausgangsmaterial bzw. Ausgangsauftrag bis zur endlichen Verwendung bzw. endlichen Auftragsausführung beschreibt, wobei jedem einzelnen Auftrag eine Auftragsstruktur zugehörig ist, deren digitale Daten in Modulen einer Kommunikationsplattform (2) nach einem der Ansprüche 1 bis 10 genutzt werden, welches folgende Schritte aufweist:
- Konfigurieren mindestens einer derartigen Auftragsstruktur (14) mittels eines Auftragsstruktur-Moduls (6), welches derart ausgestaltet ist, um mindestens eine derartige Auftragsstruktur im laufenden Betrieb, das heißt zur Laufzeit, der Kommunikationsplattform (2) mittels des Auftragsstruktur-Moduls (6) zu konfigurieren (14), so dass die Auftragsstruktur online konfiguriert und freigegeben werden kann, so dass Ad-hoc-Prozesse schnell und ohne Ausfallzeiten der Kommunikationsplattform geändert und/oder hinzugefügt werden können,
- Zuweisen von mindestens einer Berechtigung (13) für jede Auftragsstruktur an eine oder mehrere Benutzergruppen, insbesondere eine Berechtigung zum Erzeugen eines derartigen Auftrags und/oder eine Berechtigung zum Annehmen eines derartigen Auftrags zu einer derartigen Auftragsstruktur,
- Erzeugen mindestens eines derartigen Auftrags (20) mittels eines Auftraggeber-Moduls (8), wobei dieser Auftrag durch Auswahl einer derartigen Auftragsstruktur, welche die zur Erzeugung notwendige Berechtigung aufweist, erzeugt wird und wobei der Auftrag Arbeitsablaufinformationen aufweist, denen jeweils eine Statusinformation zugeordnet werden kann,
- Zuweisen des oder der Aufträge mindestens einer Benutzergruppe-ID (22) als Auftragnehmer oder Zurverfügungstellen des oder der Aufträge mittels des Auftraggeber-Moduls (8) zur Zuweisung an mindestens eine Benutzergruppe-ID,
- Bestätigen oder Ablehnen (26) des zugewiesenen Auftrags oder Melden von Interesse an einer Zuweisung eines zur Verfügung gestellten Auftrags (26) mittels eines Auftragnehmer-Moduls (10),
- Bearbeiten des Auftrags entsprechend mindestens einer dem Auftrag zugeordneter Arbeitsablaufinformation, falls der Auftrag angenommen wurde, und Anpassen der zur Arbeitsablaufinformation zugehörigen Statusinformation (36),
- Übertragen von digitalen Daten mindestens eines derartigen Auftrags zwischen den Modulen der Kommunikationsplattform (2), einschließlich dem Auftragsstruktur-Modul (6), dem Auftraggeber-Modul (8) und dem Auftragnehmer-Moduls (10), mittels einer generischen Anwendungsprogrammierschnittstelle (18) derart, dass die Statusinformationen der Aufträge von mindestens zwei der Module der Kommunikationsplattform (2) einsehbar sind.

13. Verfahren nach Anspruch 12, welches zusätzlich folgenden Schritt aufweist:
- Zuweisen des oder der Aufträge von dem Auftragnehmer-Modul (10) an eine Ressourcen-ID unter Verwendung eines Ressourcen-Moduls (12), um Statusinformationen des Auftrags anzupassen (44) und digitale Daten zu dem Auftrag zu erheben (42).

14. Verfahren zur Verwendung einer Kommunikationsplattform (2) nach einem der Ansprüche 1 bis 10 zum digitalen Datenaustausch innerhalb einer Wertschöpfungskette, bspw. einer Lieferkette, mittels mindestens eines Auftrags, wobei die Wertschöpfungskette die Prozesse, die ein Produkt oder eine Dienstleistung durchläuft, vom Ausgangsmaterial bzw. Ausgangsauftrag bis zur endlichen Verwendung bzw. endlichen Auftragsausführung beschreibt, wobei jedem einzelnen Auftrag eine Auftragsstruktur zugehörig ist, deren digitale Daten in Modulen der Kommunikationsplattform (2) nutzbar sind, durch folgende Schritte:
- Zuweisen mindestens eines derartigen Auftrags (22) mittels eines Auftraggeber-Moduls (8) an eine Benutzergruppe-ID, welche die zu dem Auftrag zugehörige Berechtigung zum Annehmen des Auftrags aufweist, wobei die Berechtigung zum Annehmen des Auftrags über die Berechtigung auf der zur Grunde liegenden Auftragsstruktur erfolgt,
- Freigeben des Auftrags (24) nach Zuweisung mittels des Auftraggeber-Moduls (8) oder nach Annahme eines zur Verfügung gestellten Auftrags (26) mittels des Auftragnehmer-Moduls (10),
- Bestätigen oder Ablehnen (26) des Auftrags oder Annehmen eines zur Verfügung gestellten Auftrags (26) mittels eines Auftragnehmer-Moduls (10),
- Bearbeiten des Auftrags entsprechend mindestens einer dem Auftrag zugeordneten Arbeitsablaufinformation, falls der Auftrag angenommen wurde, und Anpassen der zur Arbeitsablaufinformation zugehörigen Statusinformation (36),
- Fertigstellen des Auftrags mittels des Auftragnehmer-Moduls (10) oder des Ressourcen-Moduls (12),
wobei mittels einer generischen Anwendungsprogrammierschnittstelle (18) die Module der Kommunikationsplattform (2), einschließlich des Auftragsstruktur-Moduls (6), des Auftraggeber-Moduls (8) und des Auftragnehmer-Moduls (10), derart verbunden sind, dass
- digitale Daten mittels mindestens eines derartigen Auftrags zwischen den Modulen übertragen werden können,
- mindestens zwei Aufträge verschiedener derartiger Auftragsstrukturen untereinander verbunden werden können,
- das Auftragsstruktur-Modul (6) derart ausgestaltet ist, um mindestens eine derartige Auftragsstruktur im laufenden Betrieb, das heißt zur Laufzeit, der Kommunikationsplattform (2) mittels des Auftragsstruktur-Moduls (6) zu konfigurieren (14), so dass die Auftragsstruktur online konfiguriert und freigegeben werden kann, so dass Ad-hoc-Prozesse schnell und ohne Ausfallzeiten der Kommunikationsplattform geändert und/oder hinzugefügt werden können,
- und die Statusinformationen dieser Aufträge an mindestens zwei der Module weitergeleitet werden können.

## Claims

1. A communication platform for exchanging digital data within a value added chain, for example a supply chain, by means of at least one order, wherein the value added chain describes the processes, which a product or a service undergoes from the starting material resp. original order up to the ultimate utilization or ultimate order processing, wherein each individual order has an order structure, the digital data of which can be used in modules of the communication platform (2) online via a generic application programming interface (18), and wherein the communication platform (2) features at least the following modules:
i) an order structure module (6) that is designed
a) for configuring (14) at least one such order structure during the ongoing operation of the communication platform, i.e. during its run-time, so that the order structure can be configured and released online, so that ad hoc processes can be modified and/or added quickly and without downtimes of the communication platform,
b) for granting (13) an authorization to create such an order and/or an authorization to accept such an order to one or more user groups for each order structure, and
c) for granting (13) an authorization to create such an order to at least one user group ID participating in the value added chain and an authorization to accept an order to at least one other user group ID,
ii) a client module (8) that is designed
a) for generating (20) at least one such order, wherein this order is created by selecting such an order structure, for which the user ID has the required "create" authorization, and wherein the order is associated with workflow information, with which one status information can be respectively associated, and
b) for allocating (22) and releasing (24) the order or the orders to a user group ID or for releasing the order or orders to one or more user group IDs for the purpose of an assignment by releasing the order or the orders and
iii) a contractor module (10) that is designed
a) for confirming or rejecting an order assigned to a user group ID or for reporting (26) interest in the allocation of a released order and
b) for modifying (36) the status information of the order,
iv) and wherein the modules of the communication platform (2), including the order structure module (6), the client module (8) and the contractor module (10), are linked with the generic application programming interface (18) in such a way
- that digital data of the order structure can be used in all modules,
- a specific order can be used by the client module (8) and the contractor module (10) and
- orders having different order structures can be linked to one another.

2. The communication platform according to claim 1 with a resource module (12) that is designed for assigning mobile resources to at least one order and providing such a resource the digital data of the assigned order to the communication platform (2).

3. The communication platform according to claim 1 or 2 with an authorization module (4) that is designed to set up two authorization levels for accessing the communication platform (2), wherein an administrator authorization is designed for granting access to administrative tasks within the communication platform (2) and a processing authorization is designed for granting access to operative tasks within the communication platform (2).

4. The communication platform according to claim 3, in which the authorization module (4) is furthermore designed for authenticating access to the communication platform (2) based on an administrator ID, a resource ID and/or a user group ID.

5. The communication platform according to one of the preceding claims, in which the order has a timeframe with a starting time and a completion time, wherein this timeframe can be specified during the generation of the order (20) by means of the client module (6) or during the acceptance of the order (26) by means of the contractor module (10).

6. The communication platform according to one of the preceding claims, in which the order structure has one or more fields, wherein predefined operating modes and/or mandatory inputs are assigned to the fields during the configuration of the order structure (14).

7. The communication platform according to claim 6, in which recorded actual data forms a mandatory input of a field of the order structure and status information on the order can be created based on this actual data.

8. The communication platform according to one of the preceding claims, in which an order can be separated into multiple partial orders.

9. The communication platform according to one of the preceding claims, in which one or more GPS trackers can be assigned to an order.

10. The communication platform according to one of the preceding claims, in which working times can be recorded, wherein these working times are order-independent or associated with an order.

11. A generic application programming interface for a communication platform (2) according to one of claims 1 to 10, wherein the modules of the communication platform (2), including the order structure module (6), the client module (8) and the contractor module (10), are linked by means of the application programming interface (18) in such a way that
- digital data of the order structure can be used in all modules via the generic application programming interface (18),
- at least one such order structure can be configured (14) by means of the order structure module (6) during the ongoing operation of the communication platform, i.e. during its run-time, so that the order structure can be configured and released online, so that ad hoc processes can be modified and/or added quickly and without downtimes of the communication platform,
- as well as a specific order can be used by both the client module (8) and the contractor module (10), and
- orders having arbitrary order structures can be associated with one another.

12. A method for operating a communication platform (2) for exchanging digital data within a value added chain, for example a supply chain, by means of at least one order, wherein the value added chain describes the processes, which a product or a service undergoes from the starting material resp. original order up to the ultimate utilization or ultimate order processing, wherein each individual order has an order structure, the digital data of which can be used in modules of a communication platform (2) according to one of claims 1 to 10, with said method featuring the following steps:
- configuring at least one such order structure (14) by means of an order structure module (6), that is designed for configuring (14) at least one such order structure during the ongoing operation of the communication platform, i.e. during its run-time, so that the order structure can be configured and released online, so that ad hoc processes can be modified and/or added quickly and without downtimes of the communication platform,
- granting at least one authorization right (13), particularly an authorization to create such an order and/or an authorization to accept such an order, to one or more user groups for each order structure,
- creating at least one such order (20) by means of a client module (8), wherein this order is created by selecting such an order structure, which that has the required generating authorization, and wherein the order is associated with workflow information, with which one status information item can be associated in each case,
- assigning the order or the orders to at least one user group ID (22) as a contractor or making available the order or the orders for assignment to at least one user group ID by means of the "client" module (8),
- confirming or rejecting (26) the allocated order or reporting interest in the allocation of an order (26) previously made available by means of the "contractor" module (10),
- processing the order in accordance with at least one workflow status information item allocated to the order if the order was accepted and modifying the status information (36) associated with the workflow information, and
- transmitting digital data of at least one such order between the modules of the communication platform (2), including the order structure module (6), the client module (8) and the contractor module (10), by means of a generic application programming interface (18) in such a way that the status information on the orders can be accessed by at least two of the modules of the communication platform (2).

13. The method according to claim 12, featuring the following additional step:
- assigning the order or the orders from the contractor module (10) to a resource ID by utilizing a resource module (12) in order to adapt (44) status information on the order and to gather (42) digital data of the order.

14. A method for utilization of a communication platform (2) according to one of claims 1 to 10, for exchanging digital data within a value added chain, for example a supply chain, by means of at least one order, wherein the value added chain describes the processes, which a product or a service undergoes from the starting material resp. original order up to the ultimate utilization or ultimate order processing, wherein each individual order has an order structure, the digital data of which can be used in modules of the communication platform (2), with said utilization featuring the following steps:
- assigning at least one such order (22) to a user group ID, which has the required authorization to accept the associated order, by means of a client module (8), wherein the authorization to accept the order is granted based on the authorization to the underlying order structure,
- releasing the order (24) by means of the client module (8) after its allocation or after the acceptance of an order (26) made available by means of the contractor module (10),
- confirming or rejecting (26) the order or accepting an order (26) made available by means of a contractor module (10),
- processing the order in accordance with at least one workflow information associated with the order if the order was accepted and adapting the status information (36) associated with the workflow information, and
- completing the order by means of the contractor module (10) or the resource module (12),
wherein the modules of the communication platform (2), including the order structure module (6), the client module (8) and the contractor module (10), are linked by means of a generic application programming interface (18) in such a way that
- digital data can be transmitted between the modules by means of at least one such order,
- at least two orders with different order structures can be associated with one another,
- the order structure module (6) is designed for configuring (14) at least one such order structure during the ongoing operation of the communication platform, i.e. during its run-time, so that the order structure can be configured and released online, so that ad hoc processes can be modified and/or added quickly and without downtimes of the communication platform,
- and the status information on these orders can be forwarded to at least two of the modules.

## Revendications

1. Plateforme de communication pour l'échange de données numériques au sein d'une chaîne de valeur, par exemple une chaîne d'approvisionnement, au moyen d'au moins une commande, dans laquelle la chaîne de valeur décrit les processus par lesquels un produit ou un service passe à partir du matériel ou du service source, de la commande initiale jusqu'à l'utilisation finale ou l'exécution de la commande finale, dans lequel chaque commande individuelle est associée à une structure de commande dont les données numériques peuvent être utilisées en ligne dans des modules de la plateforme de communication (2) via une interface de programmation d'application générique (18), et la plate-forme de communication (2) comprend au moins les modules suivants :
i) un module de structure de commande (6) qui est conçu de manière à
a) configurer (14) au moins une telle structure de commande pendant le fonctionnement, c'est-à-dire au moment de l'exécution, de la plate-forme de communication (2) au moyen du module de structure de commande (6), de sorte que la structure de commande puisse être configurée et mise en ligne pour que des processus Ad-hoc puissent être rapidement modifiés et/ou ajoutés et sans aucun temps d'arrêt de la plateforme de communication,
b) attribuer à un ou plusieurs groupes d'utilisateurs une autorisation de générer une telle commande et/ou une autorisation d'accepter une telle commande pour chaque structure de commande (13),
c) attribuer à au moins un identifiant de groupe d'utilisateurs impliqué dans la chaîne de valeur une autorisation de générer une telle commande et à au moins un autre identifiant de groupe d'utilisateurs une autorisation d'accepter une commande (13),
ii) un module client (8), qui est conçu de manière à
a) générer au moins une telle commande (20), dans lequel cette commande est générée en sélectionnant une telle structure de commande pour laquelle l'ID de groupe d'utilisateurs a l'autorisation requise pour la générer, et dans lequel les informations de flux de travail sont affectées à la tâche, auxquelles respectivement une information d'état peut être attribuée,
b) affecter (22) et valider (24) le (s) travail à un ID de groupe d'utilisateurs ou mettre à disposition la ou les commande en libérant un ou plusieurs ID de groupe d'utilisateurs à des fins d'attribution,
iii) un module de mandataire (10), qui est conçu de manière à
a) confirmer ou rejeter une commande attribuée à un ID de groupe d'utilisateurs ou signaler un intérêt pour une affectation pour une commande mise à disposition (26),
b) adapter les informations d'état de la commande (36),
iv) et dans lequel les modules de la plateforme de communication (2), y compris le module de structure de commande (6), le module client (8) et le module mandataire (10) sont connectés avec l'interface de programmation d'application (18) de telle sorte que
- les données numériques de la structure de commande puissent être utilisées dans tous les modules
- ainsi qu'une commande spécifique du module client (8) et du module contractant (10) puissent être utilisées
- et les commandes de toutes les structures de commande peuvent être liées les unes aux autres.

2. Plateforme de communication selon la revendication 1 avec un module de ressources (12) qui est conçue de manière à attribuer au moins une commande à des ressources mobiles et fournir à une telle ressource les données numériques du travail attribué de la plate-forme de communication (2).

3. Plateforme de communication selon la revendication 1 ou 2 avec un module d'autorisation (4), qui est conçue pour mettre en place deux niveaux d'autorisation pour l'accès à la plateforme de communication (2), dans lequel une autorisation d'administrateur est conçue pour accéder aux tâches administratives au sein de la plate-forme de communication (2) et une autorisation de traitement est conçue de manière à donner accès à des tâches opérationnelles au sein de la plate-forme de communication (2).

4. Plateforme de communication selon la revendication 3, dans laquelle le module d'autorisation (4) est en outre conçu pour authentifier l'accès à la plateforme de communication (2) à l'aide d'un ID d'administrateur, d'un ID de ressource et/ou d'un ID de groupe d'utilisateurs.

5. Plateforme de communication selon une des revendications précédentes, dans laquelle la commande a une tranche de temps avec une heure de début et une heure de fin, cette tranche de temps lors de la génération de la commande (20) au moyen du module client (6) ou lorsque l'acceptation de la commande (26) peut être déterminée au moyen du module contractant (10).

6. Plateforme de communication selon une des revendications précédentes, dans laquelle la structure de commande présente un ou plusieurs champs, dans laquelle avec la configuration de la structure de commande (14) les champs se voient attribuer des modes de traitement prédéterminés et/ou des entrées obligatoires.

7. Plateforme de communication selon la revendication 6, dans laquelle une acquisition réelle de données est fournie en tant qu'entrée obligatoire d'un champ de la structure de commande et des informations d'état de la commande peuvent être générées sur la base de ces données réelles.

8. Plateforme de communication selon une des revendications précédentes, dans laquelle une commande peut être décomposée en plusieurs sous-commandes.

9. Plateforme de communication selon une des revendications précédentes, dans laquelle un ou plusieurs traceurs GPS peuvent être affectés à une commande.

10. Plateforme de communication selon une des revendications précédentes, dans laquelle les temps de travail peuvent être enregistrés, dans laquelle ces temps de travail sont indépendants de la commande ou sont affectés à une commande.

11. Interface de programmation d'application générique pour une plate-forme de communication (2) selon une des revendications 1 à 10, dans laquelle au moyen de l'interface de programmation d'application (18) les modules de la plate-forme de communication (2), y compris le module de structure de commande (6), le module client (8) et le module mandataire (10) sont connectés de telle manière que
- des données numériques de la structure de commande peuvent être utilisées en ligne dans tous les modules via l'interface de programmation d'application (18),
- au moins une telle structure de commande peut être configurée (14) et validée en ligne pendant le fonctionnement, c'est-à-dire à l'exécution, de la plate-forme de communication (2) au moyen du module de structure de commande (6), de sorte que les processus Ad-hoc puissent être modifiés et/ou ajoutés rapidement et sans temps d'arrêt de la plate-forme de communication,
- ainsi qu'une commande spécifique du module client (8) et du module de sous-traitant (10) peut être utilisée et
- les commandes de toutes les structures de commande peuvent être liées les unes aux autres.

12. Procédé d'exploitation d'une plate-forme de communication (2) pour l'échange de données numériques au sein d'une chaîne de valeur, par exemple une chaîne d'approvisionnement, au moyen d'au moins une commande, dans laquelle la chaîne de valeur décrit les processus par lesquels un produit ou un service passe à partir du matériel ou du service source, de la commande initiale jusqu'à l'utilisation finale ou l'exécution de la commande finale, dans lequel chaque commande individuelle possède une structure de commande associée, dont les données numériques sont utilisées dans des modules d'une plate-forme de communication (2) selon une des revendications 1 à 10, qui comporte les étapes suivantes :
- configurer au moins une telle structure de commande (14) au moyen d'un module de structure de commande (6) qui est conçu de manière à configurer (14) au moins une telle structure de commande pendant le fonctionnement, c'est-à-dire au moment de l'exécution, de la plate-forme de communication (2) à l'aide du module de structure de commande (6) de sorte que la structure de commande puisse être configurée et validée en ligne afin que des processus Ad-hoc puissent être modifiés et/ou ajoutés à la plate-forme de communication rapidement et sans temps d'arrêt,
- attribuer au moins une autorisation (13) pour chaque structure de commande à un ou plusieurs groupes d'utilisateurs, notamment une autorisation de générer une telle commande et/ou une autorisation d'accepter une telle commande pour une telle structure de commande,
- générer au moins une telle commande (20) au moyen d'un module client (8), dans lequel cet ordre est généré en sélectionnant une telle structure de commande qui a l'autorisation requise pour la génération, et dans lequel la commande a des informations de flux de travail auxquelles des informations d'état peuvent être attribuées,
- attribuer la ou les commandes à au moins un identifiant de groupe d'utilisateurs (22) en tant que mandataire ou mettre à disposition la ou les commandes au moyen du module client (8) en vue de l'affectation à au moins un identifiant de groupe d'utilisateurs,
- confirmer ou rejeter (26) la commande attribuée ou signaler un intérêt pour une attribution d'une commande (26) mise à disposition au moyen d'un module mandataire (10),
- traiter la commande conformément à au moins une information de flux de travail affectée à la commande, si la commande a été acceptée, et adapter des informations d'état associées aux informations de flux de travail (36),
- transmettre des données numériques d'au moins une telle commande entre les modules de la plate-forme de communication (2), y compris le module de structure de commande (6), le module client (8) et le module mandataire (10), au moyen d'une interface de programmation d'application générique (18) de telle sorte que les informations d'état des commandes d'au moins deux des modules la plate-forme de communication (2) puissent être visualisés.

13. Procédé selon la revendication 12, qui comprend en outre l'étape suivante :
- attribuer la ou les commandes du module mandataire (10) à un ID de ressource à l'aide d'un module de ressource (12) afin d'adapter les informations d'état du travail (44) et de collecter des données numériques sur le travail (42) .

14. Procédé d'utilisation d'une plateforme de communication (2) selon une des revendications 1 à 10 pour l'échange de données numériques au sein d'une chaîne de valeur, par exemple une chaîne d'approvisionnement, au moyen d'au moins une commande, dans laquelle la chaîne de valeur décrit les processus par lesquels un produit ou un service passe à partir du matériel ou du service source, de la commande initiale jusqu'à l'utilisation finale ou l'exécution de la commande finale, dans lequel chaque commande individuelle possède une structure de commande associée, dont les données numériques sont utilisées dans des modules d'une plate-forme de communication (2), par les étapes suivantes :
- attribuer au moins une telle commande (22) au moyen d'un module client (8) à un ID de groupe d'utilisateurs qui a l'autorisation appartenant à la commande d'accepter la commande, dans lequel l'autorisation d'accepter la commande est basée sur l'autorisation sur la structure de commande sous-jacente,
- valider la commande (24) après affectation au moyen du module client (8) ou après acceptation d'une commande (26) mise à disposition au moyen du module mandataire (10),
- confirmer ou rejeter (26) la commande ou accepter une commande (26) mise à disposition au moyen d'un module mandataire (10),
- traiter la commande conformément à au moins une information de flux de travail affectée à la commande, si la commande a été acceptée, et adapter des informations d'état (36) associées aux informations de flux de travail,
- parachever la commande au moyen du module mandataire (10) ou du module de ressource (12),
dans lequel au moyen d'une interface de programmation d'application générique (18) les modules de la plate-forme de communication (2), y compris le module de structure de commande (6), du module client (8) et du module mandataire (10) sont connectés de telle manière que
- des données numériques puissent être transmises au moyen d'au moins une telle commande entre les modules,
- au moins deux commandes de structures de commande différentes de ce type peuvent être connectées l'une à l'autre,
- le module de structure de commande (6) est conçu pour recevoir au moins une telle structure de commande pendant le fonctionnement, c'est-à-dire au moment de l'exécution, pour configurer (14) la plate-forme de communication (2) à l'aide du module de structure de commande (6) afin que la structure de commande puisse être configurée et validée en ligne de sorte que des processus Ad-hoc puissent être modifiés et/ou ajoutés à la plate-forme de communication rapidement et sans temps d'arrêt,
- et les informations d'état de ces commandes peuvent être transmises à au moins deux des modules.
